# EUROPEAN PATENT APPLICATION

(11) **EP 1 630 822 A1**
(43) Date of publication of application: **01.03.2006**
(21) Application number: 05254711.4
(22) Date of filing: 28.07.2005
(51) Int. Cl.: G21C 9/00, G21D 1/00

(54) **Arrangement for mitigating pressure loss in a steam tunnel of a boiling water reactor**

(30) Priority: 31.08.2004 US 929489
(71) Applicant: GENERAL ELECTRIC COMPANY, Schenectady, NY 12345 (US)
(72) Inventor: Moen, Stephen, Oswego New York 13126 (US); Patel, Ramesh, San Jose California 95136 (US); Shah, Harshad, Union City California 94587 (US)
(74) Representative: Pedder, James Cuthbert

(57) **Abstract**

An arrangement (200) is provided for mitigating pressure loss in a steam tunnel of a boiling water reactor. To reduce pressure loss in the steam tunnel, a diverter element (210) is operatively connected to at least one of a plurality of pipe supports (230) in a first direction opposed to a flow of steam in the steam tunnel so as to divide the steam flow over the at least one of the plurality of pipe supports (230). Further, a combiner element (220) is operatively connected to at least one of the plurality of pipe supports (230) in a second direction in a same direction as the flow of steam in the steam tunnel so as to combine the divided steam flow over the at least one of the plurality of pipe supports (230) into a continuous steam flow. This division and recombination of steam flow may reduce form losses caused by the at least one of the plurality of pipe supports (230) in the steam tunnel, which may in turn mitigate pressure loss in the steam tunnel of the boiling water reactor.

## Description

The present invention relates generally to an apparatus for mitigating pressure loss in a steam tunnel of a boiling water reactor (BWR), and to a method of mitigating pressure loss in a steam tunnel of the BWR.

A boiling water reactor (BWR) is a reactor in which water, used as both coolant and moderator, is allowed to boil in the reactor vessel. The resulting steam may be used directly to drive a turbine, which may in turn drive an electrical generator, for example through direct coupling, thereby producing electricity. In a typical BWR, the reactor core creates heat and a single loop both delivers steam to the turbine and returns water to the reactor core to cool it. The cooling water (i.e. working fluid) may be circulated by electrically powered and/or steam-driven pumps.

A BWR typically includes a reactor pressure vessel, which houses the reactor core, and associated control blades, which control the fission reaction therein. The reactor pressure vessel is typically positioned within a containment or drywell of a reactor containment building, such as a reactor plant site, for example. Thus, a BWR boils the reactor coolant to convert the coolant into steam. The steam exits at an upper portion of the reactor vessel such as at a main steam outlet nozzle, and may travel through a series of steam pipes within a main steam tunnel adjacent to the containment building. The main steam tunnel provides a pathway for the main steam piping from the reactor pressure vessel to an inlet of the turbine, which would utilize the steam in order to generate electricity.

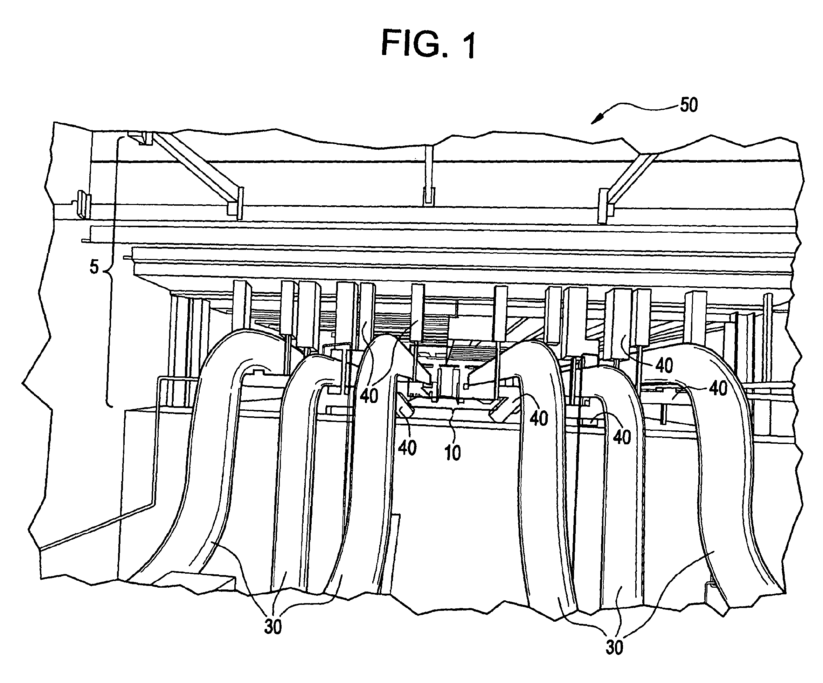

Figure 1 illustrates a perspective view from an inlet side of a main steam tunnel 50. Figure 1 illustrates the plurality of main steam pipes 30 entering an inlet side of the main steam tunnel 50. Steam pipes 30 may be either main steam pipes carrying steam from the main steam outlet of the reactor pressure vessel to the turbine, and/or may include feed water piping which provides condensed reactor coolant (the steam is condensed at the turbine by a main condenser and is pumped by a feed water pump to the reactor vessel via feed water piping.)

Referring now to Figure 1, the main steam tunnel 50 may include an entrance or inlet side 5 and an outlet or exit side 10, for example. Within the main steam tunnel 50, each steam pipe 30 and/or feed water pipe 30 may be supported by a plurality of pipe supports 40. The plurality of pipe supports 40 provide a pipe support structure, for example a Lungmen pipe support structure, throughout the main steam tunnel 50.

The pipe supports 40 take up a substantial amount of space within the main steam tunnel 50. Particularly, a substantial number of pipe supports 40 are located at the tunnel exit 10. The location and number of these pipe supports 40 may cause at least a partial blockage of the main steam tunnel 50. In other words, the number of pipe supports 40 within the main steam tunnel 50 may be oriented over and around various pipes 30 at the tunnel exit 10 in order to support the pipes as they carry the steam out of the main steam tunnel 50 toward the turbine, for example. In a Lungmen pipe support structure, the pipes 30 do not bend until they are clear of the pipe supports 40.

Thus, the partial blockage within the main steam tunnel 50 due to the number and locations of the pipe supports 40 may cause form (i.e. pressure) losses, as steam flows over the pipe supports 40 during a postulated pipe rupture accident. Further, the form losses may also lead to a reduced pressure in the steam flow.

An exemplary embodiment of the present invention is an arrangement for improving steam flow of steam generated in a nuclear reactor, including a pipe support for supporting a pipe in a steam tunnel of the nuclear reactor, a diverter element operatively attached to the pipe support in a direction opposite of the steam flow, so as to divide steam flow over the pipe support, and a combiner element operatively attached to the pipe support in the direction of the steam flow, so as to combine the divided steam flow into a continuous steam flow. The arrangement may reduce pressure losses inside of a steam tunnel of the nuclear reactor.

The invention will now be described in greater detail, by way of example, with reference to the drawings, in which:-
Fig. 1 illustrates a steam tunnel with pipe supports according to conventional methods.
Fig. 2A is a top view of an arrangement for improving steam flow in a nuclear reactor, in accordance with an exemplary embodiment of the present invention.
Figure 2B is a perspective, exploded view illustrating the relationship of pipe halves to the pipe support in figure 2A.
Fig. 3A is a top view of another arrangement for improving steam flow in a nuclear reactor, in accordance with an exemplary embodiment of the present invention.
Figure 3B is a perspective, exploded view illustrating the relationship of angle irons to the pipe support in Figure 3A.

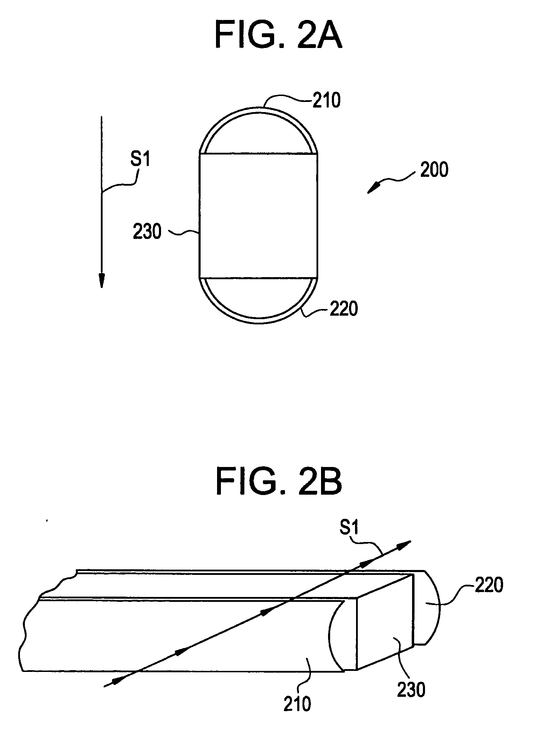

Fig. 2A is a top view of an arrangement for improving steam flow in a nuclear reactor, in accordance with an exemplary embodiment of the present invention. Figure 2B is a perspective, exploded view illustrating the relationship of pipe halves to the pipe support in Figure 2A. Arrangement 200 may include a diverter element 210 and a combiner element 220 operatively attached or connected to a pipe support 230. The pipe support 230 may be one of a plurality of pipe supports in a pipe support structure supporting at least one of a plurality of main steam and/or feed water pipes in a steam tunnel of a boiling water reactor (BWR). Direction S1 may correspond to a direction of the steam flow in the steam tunnel. As shown, diverter element 210 is attached to the pipe support 230 so as to oppose the direction S1 of the steam flow. The combiner element 220 is attached to a side of the pipe support 230 in the direction S1 of the steam flow.

The steam flow in the direction of S1 may thus be divided over diverter element 210 with reduced and/or minimal losses to steam flow pressure. For example, part of the steam flow may flow over a first side of the pipe support 230 due to diverter element 210, and a remaining part of the steam flow may flow over a second side of the arrangement 200. The steam flow thus may pass over the pipe support 230 without incurring form (i.e. pressure) losses due to the pipe support, since the steam flow has been deflected slightly by diverter element 210, thus reducing turbulence and recirculation zones that may contribute to significant form losses.

The divided steam flow may be combined by combiner element 220. At the combiner element 220, steam from along the first side and the second side of the arrangement 200 may be combined as a continuous steam flow.

The diverter element 210 may be a portion of a pipe. As shown in Figs. 2A and 2B, the diverter element 210 is embodied as a half-pipe. However, it is understood that varying degrees of pipe may be used as the diverter element 210. The diverter element may be fabricated of steel or a steel alloy material, for example.

The combiner element 220 may also be a portion of a pipe. As shown in Figs. 2A and 2B, the combiner element 220 is a half-pipe. However, it is understood that varying degrees of pipe may be used as the combiner element 220. The combiner element may also be fabricated of steel or a steel alloy material, for example.

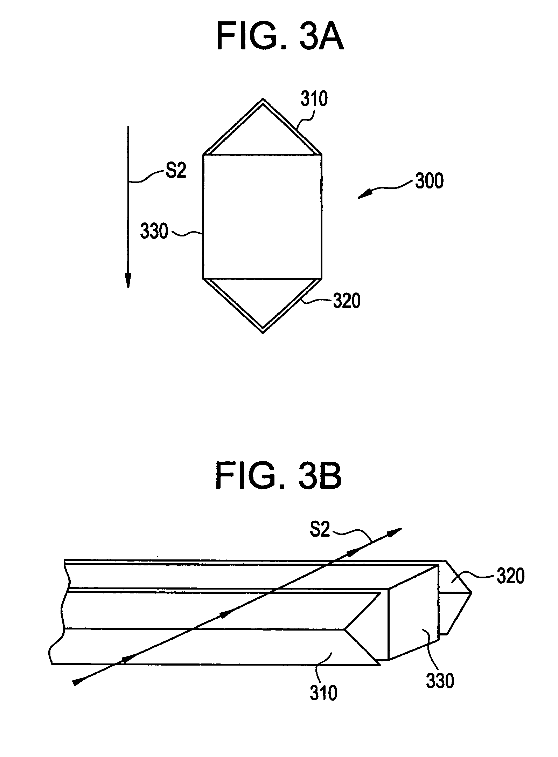

Figs. 3A is a top view of an arrangement for improving steam flow in accordance with another exemplary embodiment. Fig. 3B is an exploded, perspective view showing diverter and combiner elements 310 and 320 in relation to pipe support 330.

Referring to Figs. 3A and 3B, direction S2 may correspond to a direction of the steam flow in the steam tunnel. As shown, diverter element 310 is attached to a side of the pipe support 330 opposing the direction S2 of the steam flow, and the combiner element 320 is attached to a side of the pipe support 330 in the direction S2 of the steam flow.

The steam flow, in the direction of S2, may be divided over diverter element 310 with minimal losses to the pressure of the steam flow; namely, part of the steam flow may flow over a first side of the arrangement 300 and a remaining part of the steam flow may flow over a second side of the arrangement 300. After being divided over diverter element 310, the steam flow may pass over the pipe support 330 without incurring form losses by the pipe support.

The diverter element 310 may be a portion of an angle iron made of steel or a steel alloy. As shown in Figs. 3A and 3B, the diverter element 310 is an angle iron including a right angle. However, it is understood that various angles in the angle iron may be used as the diverter element 310. The combiner element 320 may also be a portion of a steel or steel alloy angle iron including a right angle. However, it is understood that various angles in the angle iron may be used as the combiner element 320.

The exemplary embodiments of the present invention being thus described, it will be obvious that the same may be varied in many ways. For example, above-described embodiments of diverter elements and combiner elements have been described as a portion of a pipe and/or a portion of an angle iron. However, any shape which may substantially divide a flow and then recombine a flow may be used. Further, above-described embodiments of diverter elements and combiner elements have been described as being applied at a tunnel exit of a BWR. However, the diverter elements and combiner elements may be applied to any of the plurality of pipe supports in the steam tunnel. Further, for example, the angle iron in the diverter element and/or the combiner element may be fabricated from at least two flat plates. For example, two flat plates may be welded together, thus forming the angle iron.

Further, the pipe support structure has been discussed above in terms of a generic pipe support structure. However, it is understood that the exemplary embodiments of the present invention may be employed in any pipe support structure, for example a Lungmen pipe support structure.

## Claims

1. An arrangement (200, 300) for improving steam flow of steam generated in a nuclear reactor, comprising:
a pipe support (230, 330) for supporting a pipe in a steam tunnel (50) of the nuclear reactor;
a diverter element (210, 310) operatively attached to the pipe support (230, 330) in a direction opposite of the steam flow, so as to divide steam flow over the pipe support (230, 330); and
a combiner element (220, 320) operatively attached to the pipe support (230, 330) in the direction of the steam flow, so as to combine the divided steam flow into a continuous steam flow.

2. The arrangement (200, 300) of claim 1, wherein the diverter element (210, 310) is a portion of a pipe attached to a surface of the pipe support (230, 330).

3. The arrangement (200, 300) of claim 1 or 2, wherein the combiner element (220, 320) is a portion of a pipe attached to a surface of the pipe support (230, 330).

4. The arrangement (200, 300) of claim 1, wherein the diverter element (210, 310) is an angle iron attached to a surface of the pipe support (230, 330).

5. The arrangement (200, 300) of claim 1, wherein the combiner element (220, 320) is an angle iron attached to a surface of the pipe support (230, 330).

6. The arrangement (200, 300) of claim 1, wherein the pipe support (230, 330) is a portion of a Lungmen pipe support structure.

7. The arrangement (200, 300) of claim 4, wherein the angle iron includes at least two flat plates.

8. The arrangement (200, 300) of claim 7, wherein the at least two flat plates are welded together.

9. The arrangement (200, 300) of claim 5, wherein the angle iron includes at least two flat plates.

10. The arrangement (200, 300) of claim 9, wherein the at least two flat plates are welded together.
